## Europäisches Patentamt
## European Patent Office
## Office européen des brevets

(19)

(11) Numéro de publication: **0 236 199**
**B1**

(12) # FASCICULE DE BREVET EUROPEEN

(45) Date de publication du fascicule du brevet:
**24.05.89**

(51) Int. Cl.⁴: **F16F 13/00**

(21) Numéro de dépôt: **87400317.1**

(22) Date de dépôt: **12.02.87**

(54) **Support hydroélastique, notamment pour moteur de véhicule.**

(30) Priorité: **25.02.86 FR 8602581**

(43) Date de publication de la demande:
**09.09.87 Bulletin 87/37**

(45) Mention de la délivrance du brevet:
**24.05.89 Bulletin 89/21**

(84) Etats contractants désignés:
**DE GB IT**

(56) Documents cités:
**EP-A- 0 014 742**
**EP-A- 0 219 786**
**DE-A- 2 948 408**
**FR-A- 2 435 632**
**FR-A- 2 547 378**
**GB-A- 2 166 516**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Le Fol, Marcel, 12, Impasse du Verger Domloup, F-35410 Chateaugiron(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

La présente invention concerne un support hydroélastique destiné à relier deux ensembles à isoler l'un de l'autre, ces deux ensembles pouvant être, par exemple, un groupe motopropulseur et la structure d'un véhicule automobile.

On sait que, sur un véhicule automobile, les supports utilisés pour la suspension du groupe motopropulseur doivent assurer, à la fois, un bon filtrage des vibrations à haute fréquence et faible amplitude, dues aux imperfections d'équilibrage du moteur, et un bon amortissement des trépidations à basse fréquence et forte amplitude provenant de la route.

Ce double résultat peut être obtenu, de façon connue, avec un support du type comprenant deux chambres remplies de liquide, délimitées en partie par des parois élastiques et reliées par un canal de communication.

On connaît d'après le document DE-A 2 948 408 un tel agencement correspondant à la définition donnée dans le préambule de la revendication 1, dans lequel l'une des deux chambres est délimitée par une membrane souple maintenue par un collier sur l'une des armatures. Une telle membrane est très vulnérable et présente un grand risque de détérioration.

L'invention vise à réaliser un support du type défini ci-dessus qui, par rapport aux supports connus, présente, notamment, les avantages suivants:

— le support ne comprend qu'un seul élément comportant une partie moulée en matériau élastique;

— il possède un faible encombrement en hauteur;

— les parois de faible épaisseur en matériau élastique sont parfaitement protégées par des parois rigides.

L'invention concerne un support hydroélastique comprenant un premier et un second éléments de fixation destinés à être fixés chacun sur un de deux ensembles à isoler l'un de l'autre, ces deux éléments étant séparés par une masse en matériau élastique composée, d'une part d'une partie massive de forme générale à peu près tronconique et, d'autre part d'une membrane annulaire, ladite masse délimitant, en coopération avec le second élément de fixation, une chambre de travail et une chambre d'expansion s'étendant autour de la partie massive, remplies de liquide et reliées par un canal de communication, caractérisé en ce que la membrane annulaire est disposée entre une armature intermédiaire et une armature extérieure et serrée, en même temps que la partie périphérique de la masse élastique comprise entre lesdites armatures, entre un boîtier et un couvercle, fixés l'un sur l'autre et constituant le second élément de fixation du support; le boîtier délimitant, avec la partie massive de la masse élastique, la chambre de travail et le canal de communication entre les deux chambres, ainsi que, avec ladite partie massive et la membrane annulaire, la chambre d'expansion.

Suivant d'autres caractéristiques:

— le boîtier a une forme étagée et comporte un fond de plus petit diamètre, qui délimite en partie la chambre de travail et le canal de communication, et une partie annulaire qui délimite en partie la chambre d'expansion;

— l'armature intermédiaire comporte au moins une échancrure au droit de laquelle la masse élastique a une épaisseur réduite pour former une paroi mince entre la chambre de travail et la chambre d'expansion;

— la masse en matériau élastique comporte un bossage central coopérant avec le fond du boîtier pour limiter les débattements du support dans la direction axiale, dans le sens de la compression;

— le couvercle comporte un prolongement en direction du premier élément de fixation, qui coopère avec la masse de matériau élastique pour limiter les débattements du support, dans la direction axiale dans le sens de l'extension, et dans n'importe quelle direction transversale.

Un exemple de réalisation de l'invention fait l'objet de la description qui suit, en référence aux dessins joints dans lesquels :

- la Figure 1 est une coupe en élévation, selon la ligne I-I de la Figure 2;
- la Figure 2 est une vue moitié par le dessus et moitié en coupe selon la ligne II-II de la Figure 1;
- la Figure 3 est une section partielle selon la ligne III-III de la Figure 2;
- la Figure 4 est une section partielle selon la ligne IV-IV de la Figure 2;
- la Figure 5 est une section partielle selon la ligne V-V de la Figure 2;
- la Figure 6 est une vue en coupe éclatée des constituants du support;
- la Figure 7 est une vue en perspective du support complet.

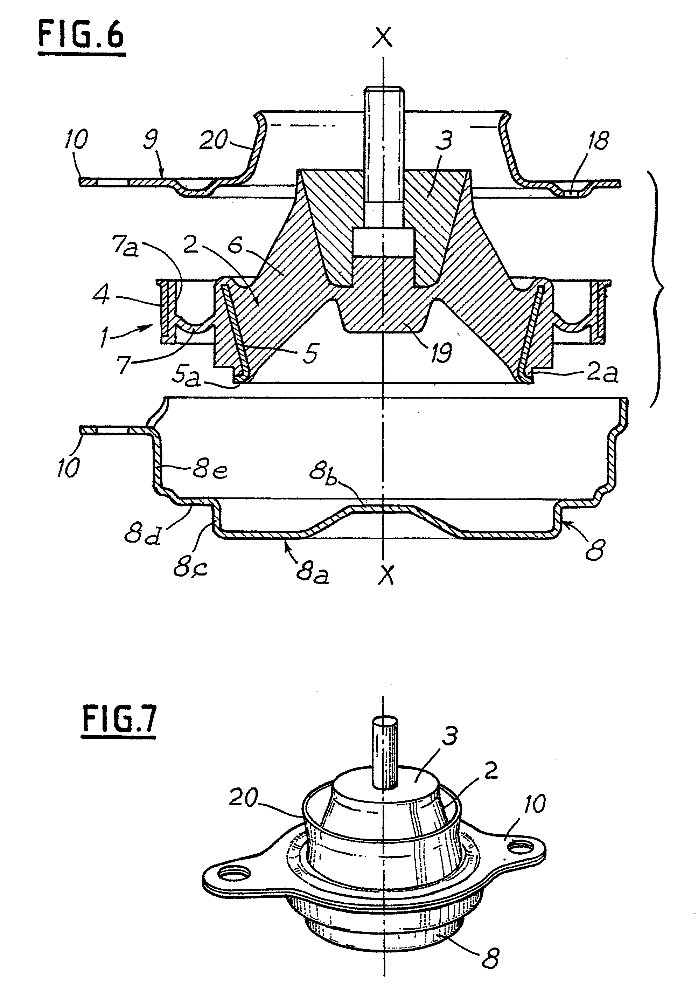

Le support représenté comprend une pièce principale, composite 1 (Figure 6) constituée par une masse 2 en matériau élastique adhérisée sur un premier élément de fixation 3, sur une armature extérieure 4, de forme générale cylindrique, et sur une armature intermédiaire 5 ayant dans l'exemple représenté une forme générale tronconique dont le bord inférieur est replié vers l'extérieur en 5a.

La masse 2 forme, d'une part, une partie massive 6, de forme générale tronconique, disposée entre le premier élément de fixation 3 et l'armature intermédiaire 5 et, d'autre part, une membrane annulaire 7 disposée entre l'armature intermédiaire 5 et l'armature extérieure 4. Cette membrane 7 forme au moins une onde pour ne pas contrarier ses déplacements parallèlement à l'axe X-X du support. Elle s'étend suivant un plan moyen perpendiculaire à l'axe X-X et se termine vers l'extérieur par une jupe cylindrique 7a, adhérisée sur l'armature 4.

Les autres constituants du support sont un boîtier 8 et un couvercle 9. La partie périphérique de la pièce principale 1, comprise entre l'armature intermédiaire 5 et l'armature extérieure 4, est serrée entre le boîtier 8 et le couvercle 9 qui sont sertis l'un sur l'autre sur la majeure partie de leur périphérie, tout en délimitant des oreilles de fixation 10. Cet assemblage s'effectue, de façon classique, en état d'immersion dans un liquide antigel.

Le boîtier a une forme étagée, pour délimiter un fond 8a, comportant le cas échéant une partie centrale surélevée 8b, une partie axiale 8c en contact par son bord supérieur avec la masse 6, une partie annulaire 8d située face à la membrane 7 et un rebord 8e fixé au couvercle 9.

L'ensemble formé par le boîtier 8 et le couvercle 9 constitue un second élément de fixation du support.

Les pièces 1, 8 et 9 étant assemblées, une première chambre 11 de travail est délimitée, principalement par le boîtier 8 et la partie tronconique 6 de la masse élastique, tandis qu'une seconde chambre 12 d'expansion, de forme annulaire, est délimitée entre ce même boîtier 8 et la membrane 7.

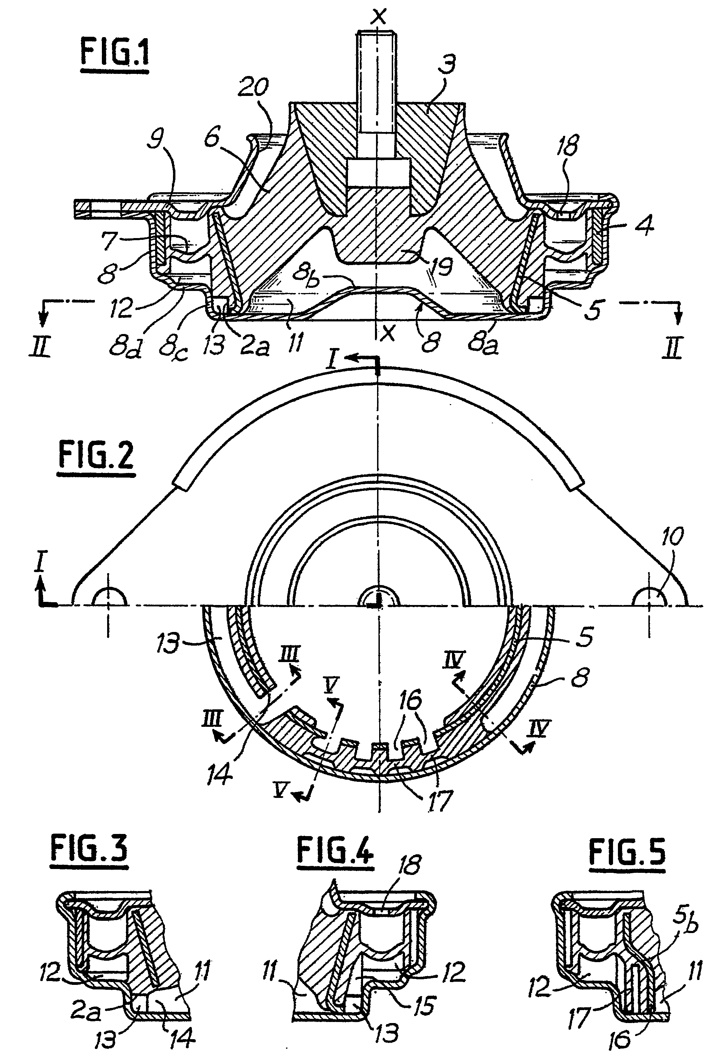

Un canal 13 de communication entre les chambres 11 et 12 est également ménagé entre le boîtier 8 et un décrochement ou une feuillure 2a de la masse élastique 2. Ce canal débouche dans la chambre 11 par un passage 14 ménagé dans la masse 2 et l'armature 5 (Figures 2 et 3) et, dans la chambre 12, par un passage 15 ménagé dans la masse 2 (Figure 4). Dans l'exemple choisi, le canal 13 s'étend sur un angle au centre d'environ 270°. Ses caractéristiques dimensionnelles n'ont pas à être décrites en détail car le principe et le calcul de tels supports sont bien connus dans la technique.

Entre les deux passages 14 et 15, du côté opposé au canal 13, l'armature intermédiaire 5 présente des échancrures 16 au droit desquelles la masse élastique 2 est réduit à des parois minces 17 (Figures 2 et 5) séparant ainsi les chambres 11 et 12. Ces parois minces jouent le rôle de cloisons mobiles à déplacement limité entre les deux chambres. L'armature 5 est déformée dans cette zone 5b (Figure 5) et a une section en S ou en Z pour offrir un espace suffisant de part et d'autre des parois 17.

Le couvercle 9 est percé d'au moins un orifice tel que 18 pour permettre le passage de l'air lors des mouvements de la membrane 7.

Un bossage central 19, venu de matière avec la masse élastique 2, sert de butée de limitation des débattements dans le sens de la compression verticale, par coopération avec le fond 8b du boîtier 8.

Un prolongement 20, de forme générale tronconique, du couvercle 9, sert de limiteur de débattement, par coopération avec la masse élastique 2, aussi bien dans le sens de l'extension verticale que dans n'importe quelle direction transversale.

Les avantages qu'offre un tel support sont les suivants :
- il est de construction simplifiée puis-qu'il ne comporte qu'un seul élément possédant une partie moulée en matériau élastique;
- il a un encombrement en hauteur particulièrement faible;
- les parois 7 et 17 de faible épaisseur sont parfaitement protégées par les pièces métalliques;
- la ou les parois mobiles 17 sont obtenues sans adjonction d'une pièce supplémentaire;
- il est pourvu de limiteurs de débattement dans toutes les directions, là-encore sans adjonction de pièces supplémentaires.

## Revendications

1. Support hydroélastique comprenant un premier (3) et un second (8, 9, 10) éléments de fixation destinés à être fixés chacun sur un de deux ensembles à isoler l'un de l'autre, ces deux éléments étant séparés par une masse en matériau élastique (2) composée, d'une part d'une partie massive (6) de forme générale à peu près tronconique et, d'autre part d'une membrane annulaire (7), ladite masse (2) délimitant, en coopération avec le second élément de fixation (8, 9, 10), une chambre de travail (11), et une chambre d'expansion (12) s'étendant autour de la partie massive (6), remplies de liquide et reliées par un canal de communication (13), caractérisé en ce que la membrane annulaire (7) est disposée entre une armature intermédiaire (5) et une armature extérieure (4) et serrée, en même temps que la partie périphérique de la masse élastique (2) comprise entre lesdites armatures, entre un boîtier (8) et un couvercle (9), fixés l'un sur l'autre et constituant le second élément de fixation du support; le boîtier (8) délimitant, avec la partie massive (6) de la masse élastique, la chambre de travail (11) et le canal de communication entre les deux chambres (13), ainsi que, avec ladite partie massive et la membrane annulaire (7), la chambre d'expansion (12).

2. Support hydroélastique suivant la revendication 1, caractérisé en ce que la membrane annulaire (7) s'étend à peu près radialement par rapport à l'axe (X–X) du support, entre la périphérie de la partie massive (6) de la masse (2) en matériau élastique et une jupe cylindrique (7a) adhérisée sur l'armature extérieure (4) également de forme cylindrique.

3. Support hydroélastique selon l'une quelconque des revendications 1 et 2, caractérisé en ce que le boîtier (8) a une forme étagée et comporte un fond (8a) de plus petit diamètre, qui délimite en partie la chambre de travail (11) et le canal de communication (13), et une partie annulaire (8d) qui délimite en partie la chambre d'expansion (12).

4 - Support hydroélastique selon la revendication 3, caractérisé en ce que la masse (2) de matériau élastique comporte dans sa partie dirigée vers le fond (8a) du boîtier (8), un décrochement ou une feuillure (2a), s'étendant sur une portion de sa périphérie et qui délimite en partie le canal de communication (13), ce dernier étant relié, à ses deux extrémités, d'une part avec la chambre de travail (11), par un passage (14) ménagé dans la masse de matériau élastique (2) et dans l'armature intermédiaire (5) et, d'autre part avec la chambre d'expansion (12), par un passage (15) ménagé dans la masse de matériau élastique (2).

5 - Support hydroélastique la revendications 1, caractérisé en ce que l'armature intermédiaire (5) comporte au moins une échancrure (16) au droit de laquelle la masse élastique (2) a une épaisseur réduite pour former une paroi mince (17) entre la chambre de travail (11) et la chambre d'expansion (12).

6 - - Support hydroélastique selon la revendication 5, caractérisé en ce qu'au moins à l'emplacement de l'échancrure (16), l'armature intermédiaire (5) a une section en S ou en Z.

7 - - Support hydroélastique selon l'une quelconque des revendications 1 à 6, caractérisé en ce que l'armature intermédiaire (5) a une forme générale tronconique.

8 - Support hydroélastique selon l'une quelconque des revendications 1 à 7, caractérisé en ce que la masse (2) en matériau élastique comporte un bossage central (19) coopérant avec le fond (8a, 8b) du boîtier pour limiter les débattements du support dans la direction axiale, dans le sens de la compression.

9 - Support hydroélastique selon l'une des revendications 1 à 8, caractérisé en ce que le couvercle comporte un prolongement (20) en direction du premier élément de fixation (3), qui coopère avec la masse de matériau élastique (2) pour limiter les débattements du support, dans la direction axiale, dans le sens de l'extension, et dans n'importe quelle direction transversale.

10 - - Support hydroélastique selon la revendications 1, caractérisé en ce que le couvercle (9) comporte au moins un orifice (18) mettant à l'air libre le volume délimité entre ce couvercle et la membrane (7).

**Claims**

1. A hydroelastic support comprising a first fixing element (3) and a second fixing element (8, 9, 10) each intended to be fixed to one of two assemblies which are to be insulated from each other, said two elements being separated by a mass of elastic material (2) consisting on the one hand of a massive portion (6) having a roughly frustoconical general shape and, on the other hand, an annular membrane (7), said mass (2) defining, in conjunction with the second fixing element (8, 9, 10), a work chamber (11), and an expansion chamber (12) extending around the massive portion (6), said chambers being filled with liquid and interconnected by a communication channel (13) characterized in that the annular membrane (7) is disposed between an intermediate armature (5) and an outer armature (4) and gripped, together with the peripheral portion of the elastic mass (2) contained between said armatures, between a housing (8) and a cover (9) which are fixed to each other and constitute the second fixing element of the support; the housing (8) defining, with the massive portion (6) of the elastic mass, the work chamber (11) and the communication channel between the two chambers (13) as well as, with said massive portion and the annular membrane (7), the expansion chamber (12).

2. A hydroelastic support according to claim 1, characterized in that the annular membrane (7) extends substantially radially relative to the axis (X-X) of the support, between the periphery of the massive portion (6) of the mass (2) of elastic material and a cylindrical skirt (7a) bonded to the outer armature (4), which is also cylindrical in shape.

3. A hydroelastic support according to claim 1 or 2, characterized in that the housing (8) has a stepped shape and includes a base (8a) of smaller diameter which partly defines the work chamber (11) and the communication channel (13), and an annular portion (8d) which p-artly defines the expansion chamber (12).

4. A hydroelastic support according to claim 3, characterized in that the mass (2) of elastic material includes, in its portion directed towards the base (8a) of the housing (8), a step or rabbet (2a) extending over part of its periphery and partly defining the communication channel (13), this channel being connected at both ends, on the one hand to the work chamber (11), via a passage (14) formed in the mass of elastic material (2) and in the intermediate armature (5) and, on the other hand, to the expansion chamber (12) via a passage (15) formed in the mass of elastic material (2).

5. A hydroelastic support according to claim 1, characterized in that the intermediate armature (5) has at least one notch (16) in the region of which the elastic mass (2) has a reduced thickness so as to form a thin wall (17) between the work chamber (11) and the expansion chamber (12).

6. A hydroelastic support according to claim 5, characterized in that, at least at the site of the notch (16) the intermediate armature (5) has an S or Z-shaped section.

7. A hydroelastic support according to any one of the claims 1 to 6, characterized in that the intermediate armature (5) is of a generally frustoconical shape.

8. A hydroelastic support according to any of claims 1 to 7, characterized in that the mass (2) of elastic material has a central boss (19) which cooperates with the base (8a, 8b) of the housing in order to limit the axial movements of the support in the direction of compression.

9. A hydroelastic support according to one of claims 1 to 8, characterized in that the cover comprise an extension (20) in the direction of the first fixing element (3), which cooperates with the mass of elastic material (2) so as to limit the axial movements of the support in the direction of extension and in any transverse direction.

10. A hydroelastic support according to claim 1, characterized in that the cover (9) has at least one opening (18) which allows the volume defined between the cover and the membrane (7) to communicate with the open air.

**Patentansprüche**

1. Hydroelastisches Lager mit einem ersten (3) und einem zweiten (8, 9, 10) Befestigungselement für die jeweilige Befestigung auf einem von zwei Anordnungen zur Isolierung der einen von der anderen, wobei die beiden Elemente durch ein Stück oder eine Masse aus elastischem Verbundmaterial (2) getrennt sind, einerseits durch einen Massenbereich (6) von im allgemeinen ungefährer Kegelstumpfform und andererseits durch eine ringförmige Membran (7), wobei die Masse (2) in Zusammenwirkung mit dem zweiten Befestigungselement (8, 9, 10) eine Arbeitskammer (11) und eine Expansionskammer (12) begrenzt, die sich um den Massenbereich (6) erstreckt, welche mit Flüssigkeit gefüllt und durch einen Verbindungskanal (13) miteinander verbunden sind, dadurch gekennzeichnet, daß die ringförmige Membrane (7) zwischen einer Zwischenarmatur (5) und einer Außenarmatur (4) angeordnet und zu gleicher Zeit wie der Umfangsbereich der elastischen Masse (2), welche sich zwischen den Armaturen befindet, zwischen einem Gehäuse (8) und einem Deckel (9) eingespannt ist, die aufeinander befestigt sind und das zweite Befestigungselement des Lagers bilden; wobei das Gehäuse (8) mit dem massiven Bereich bzw. dem Massenbereich (6) der elastischen Masse die Arbeitskammer (11) und den Verbindungskanal (13) zwischen den beiden Kammern sowie mit dem Massenbereich und der ringförmigen Membrane (7) die Expansionskammer (12) begrenzt.

2. Hydroelastisches Lager nach Anspruch 1, dadurch gekennzeichnet, daß die ringförmige Membrane (7) sich ungefähr radial bezüglich der Achse (X–X) des Lagers zwischen dem Umfang des Massenbereichs (6) der Masse (2) aus elastischem Material und einer zylindrischen Schürze (7a) erstreckt, welche auf der ebenfalls Zylinderform aufweisenden Außenarmatur (4) anhaftet.

3. Hydroelastisches Lager nach einem der Ansprüche 1 oder 2, dadurch gekennzeichnet, daß das Gehäuse (8) Stufenform und einen Boden (8a) von einem geringeren Durchmesser aufweist, der teilweise die Arbeitskammer (11) und den Verbindungskanal (13) begrenzt, und einen ringförmigen Bereich (8d) aufweist, der teilweise die Expansionskammer (12) begrenzt.

4. Hydroelastisches Lager nach Anspruch 3, dadurch gekennzeichnet, daß die Masse (2) aus elastischem Material in ihrem auf den Boden (8a) des Gehäuses (8) gerichteten Bereich einen Absatz oder einen Anschlag (2a) aufweist, der sich über einen Anschnitt ihres Umfangs erstreckt und teilweise den Verbindungskanal (13) begrenzt, wobei letzterer an seinen beiden Enden einerseits mit der Arbeitskammer (11) durch einen Kanal (14), der in der Masse des elastischen Materials (2) und in der Zwischenarmatur (5) ausgebildet ist, und andererseits mit der Expansionskammer (12) durch einen Kanal (15) verbunden ist, der in der Masse des elastischen Materials (2) ausgebildet ist.

5. Hydroelastisches Lager nach Anspruch 1, dadurch gekennzeichnet, daß die Zwischenarmatur (5) wenigstens einen bogenförmigen Abschnitt (16) aufweist aufgrund (au droit de) dessen die elastische Masse (2) eine verringerte Dicke aufweist, um eine dünne Seitenwand (17) zwischen der Arbeitskammer (11) und der Expansionskammer (12) zu bilden.

6. Hydroelastisches Lager nach Anspruch 5, dadurch gekennzeichnet, daß wenigstens an der Stelle des bogenförmigen Abschnitts (16) die Zwischenarmatur (5) einen Querschnitt in Form eines S oder Z aufweist.

7. Hydroelastisches Lager nach einem der Ansprüche 1 bis 6, dadurch gekennzeichnet, daß die Zwischenarmatur (5) allgemein eine Kegelstumpfform aufweist.

8. Hydroelastisches Lager nach einem der Ansprüche 1 bis 7, dadurch gekennzeichnet, daß die Masse (2) aus elastischem Material einen zentralen Vorsprung (19) aufweist, der mit dem Boden (8a, 8b) des Gehäuses zusammenwirkt, um den Durchfederungsweg des Lagers in der axialen Richtung in Richtung der Komprimierung zu begrenzen.

9. Hydroelastisches Lager nach einem der Ansprüche 1 bis 8, dadurch gekennzeichnet, daß der Deckel eine Verlängerung (20) in Richtung des ersten Befestigungselements (3) aufweist, die mit der Masse des elastischen Materials (2) zusammenwirkt, um die Durchfederungswege des Lagers in axialer Richtung, in Richtung der Entspannung und in jeglicher Querrichtung zu begrenzen.

10. Hydroelastisches Lager nach Anspruch 1, dadurch gekennzeichnet, daß der Deckel (9) wenigstens eine Öffnung (18) aufweist, die das zwischen dem Deckel und dem Membran (7) begrenzte Volumen nach außen freigibt.

FIG.1

FIG.2

FIG.3

FIG.4

FIG.5

## FIG.6

## FIG.7